# EUROPÄISCHE PATENTSCHRIFT

(11) **EP 1 828 590 B1**
(45) Veröffentlichungstag und Bekanntmachung des Hinweises auf die Patenterteilung: **27.01.2010**
(21) Anmeldenummer: 05821691.2
(22) Anmeldetag: 20.12.2005
(51) Int. Cl.: F02G 5/02, H01M 8/04

(54) **SYSTEM AUS EINER BRENNSTOFFZELLE UND EINER BRENNKRAFTMASCHINE**
SYSTEM CONSISTING OF A FUEL CELL AND AN INTERNAL COMBUSTION ENGINE
SYSTEME FORME D'UNE PILE A COMBUSTIBLE ET D'UN MOTEUR A COMBUSTION INTERNE

(30) Priorität: 23.12.2004 DE 102004062152
(43) Veröffentlichungstag der Anmeldung: 05.09.2007
(73) Patentinhaber: Bayerische Motoren Werke Aktiengesellschaft, 80809 München (DE)
(72) Erfinder: KUEHN, Karsten, 80807 München (DE); TACHTLER, Joachim, 85737 Ismaning (DE); KAMMERER, Jürgen, 85276 Pfaffenhofen (DE); LEINHOS, Dirk, Christian, 48085 Troy, Michigan (US); SCHLERF, Guenter, 82166 Gräfelfing (DE)
(86) Internationale Anmeldenummer: PCT/EP2005/013690
(87) Internationale Veröffentlichungsnummer: WO 2006/069670

(56) Entgegenhaltungen:
- WO-A-95/27845
- DE-C1- 19 913 795
- US-A1- 2004 177 607
- US-B1- 6 502 533

## Beschreibung

Die Erfindung betrifft ein System bestehend aus einer Brennstoffzelle und einer Brennkraftmaschine mit einer Abgasanlage, insbesondere für ein Kraftfahrzeug, wobei zur Erzeugung einer thermischen Kopplung das Gehäuse der Brennstoffzelle vom Abgasstrom der Brennkraftmaschine umströmt wird. Zum technischen Umfeld wird neben der DE 101 13 000 A1 und der DE 199 13 795 C1 sowie der DE 100 54 007 A1 auf die WO95/27845 A verwiesen..

Insbesondere für den Einsatz in Kraftfahrzeugen könnte eine Kombination aus einer als Fzg.-Antriebsaggregat fungierenden Brennkraftmaschine und einer Brennstoffzelle, die elektrische Energie entweder nur in Form einer APU (= auxiliary power unit) oder sogar für einen elektromotorischen Fzg.-Antrieb, der dann als sog. Hybridantrieb gestaltet wäre, erzeugt, ein interessantes Zukunftskonzept darstellen. Dabei existieren bereits unterschiedliche Vorschläge, wie die Brennstoffzelle und die Brennkraftmaschine derart thermisch miteinander gekoppelt sein können, dass die Abwärme eines dieser beiden Aggregate vom anderen Aggregat genutzt werden kann.

So ist in der DE 101 13 000 A1 eine Wärmekopplung zwischen dem Gehäuse der Brennkraftmaschine, d.h. dem sog. Motorblock, und der Brennstoffzelle vorgeschlagen, um die Verlustwärme und dabei insbesondere die Nachwärme der Brennstoffzelle beim Fahrzeugstillstand für die Temperierung der Brennkraftmaschine zu nutzen. Gemäß der DE 199 13 795 C1 sind den Aggregaten Brennstoffzelle und Brennkraftmaschine eine Reihe von Bauteilen, wie Kühler, Abgasanlage und Luftfilter gemeinsam. Dabei kann das Brennstoffzellensystem von den Abgasen der Brennkraftmaschine aufgeheizt werden, und zwar über einen oder mehrere geeignete Wärmetauscher, durch die andererseits Luft oder Kraftstoff für die Brennstoffzelle geführt ist. Nach der DE 100 54 007 A1 schließlich sind Energie-und/oder Stoffströme eines Antriebsverbrennungsmotors eines Kraftfahrzeugs mit denjenigen des Brennstoffzellensystems gekoppelt. Die WO 95/27845 zeigt einen Elektrolyseur, der in einem Abgasrohr einer Brennkraftmaschine eingewickelt ist und somit indirekt von deren Abgas umströmt wird.

Hiermit soll nun aufgezeigt werden, wie eine solche grundsätzlich bekannte thermische Kopplung zwischen einer Brennstoffzelle und einer Brennkraftmaschine noch weiter gesteigert und somit verbessert werden kann (= Aufgabe der vorliegenden Erfindung).
Die Lösung dieser Aufgabe ist für ein System aus Brennstoffzelle und Brennkraftmaschine nach dem Oberbegriff des Anspruchs 1 dadurch gekennzeichnet, dass die Brennstoffzelle und zusätzlich ein Nachbrenner für deren Abgas und/oder ein Reformer zur Aufbereitung von deren Kraftstoff in einem direkt vom Abgasstrom umströmten oder von diesem außenseitig beaufschlagten Gehäuse vorgesehen sind, das innerhalb eines den Abgasstrom der Brennkraftmaschine führenden und einen entsprechend vergrößerten Querschnitt aufweisenden Rohres oder Hohlkörpers angeordnet ist. Vorteilhafte Aus- und Weiterbildungen sind Inhalt der Unteransprüche.

Grundsätzlich bekannt ist eine wärmeübertragende Verbindung zwischen dem Abgasstrom einer Brennkraftmaschine und einer Brennstoffzelle bzw. dem dieser zugeführten Luftstrom oder Brennstoffstrom. Hier wird nun jedoch eine direkte Wärmeübertragung zwischen dem Abgas der Brennkraftmaschine und der Brennstoffzelle vorgeschlagen, und zwar dadurch, dass die Brennstoffzelle bzw. ein entsprechendes Gehäuse derselben, innerhalb dessen unter anderem die über die Elektroden der Brennstoffzelle miteinander reagierenden Gasströme über diese Elektroden geführt sind, direkt vom Abgas der Brennkraftmaschine umströmt wird. Für eine schnelle Aufheizung der Brennstoffzelle, bspw. einer Festoxid-Brennstoffzelle (SOFC), deren Betriebstemperatur bekanntlich in der Größenordnung von 600°C bis 800°C liegt, ist der relativ heiße Abgasstrom der Brennkraftmaschine, wenn diese vor oder zeitgleich mit der Brennstoffzelle in Betrieb genommen wird, äußerst hilfreich. Selbstverständlich kann die Brennstoffzelle auch über ihre gesamte Betriebsdauer durch den Abgasstrom der Brennkraftmaschine geeignet temperiert werden.

Die Wärmeübertragung zwischen dem Brennkraftmaschinen-Abgas und der Brennstoffzelle erfolgt auf diesem direkten Weg wesentlich schneller und effizienter als (nur) über einen Umweg über Wärmetauscher, wenngleich eine solche letztgenannte wärmeübertragende Verbindung über Wärmetauscher (nämlich insbesondere über einen der Brennstoffzelle zugeführten Fluidstrom) zusätzlich und unterstützend vorgesehen sein kann. Es kann also zusätzlich zur hier zunächst vorgeschlagenen direkten Wärmeübertragung zwischen dem Abgas der Brennkraftmaschine und der Brennstoffzelle zusätzlich eine wärmeübertragende Verbindung über einen Wärmetauscher (oder dgl.) vorgesehen sein, derart, dass Abgase der Brennkraftmaschine mit dem der Brennstoffzelle zugeführten Luftstrom oder Brennstoffstrom in wärmeübertragender Verbindung stehen. Gleiches gilt im übrigen auch für die Abgase der Brennstoffzelle, d.h. auch die darin enthaltene Wärme kann über einen Wärmetausch mit einem anderen Fluidstrom der Brennstoffzelle zum Teil wieder zugeführt werden.

Zusätzlich zur Brennstoffzelle wird auch ein Nachbrenner für deren Abgas und/oder ein Reformer zur Aufbereitung von deren Kraftstoff zumindest im wesentlichen vom Abgasstrom der Brennkraftmaschine umströmt bzw. diese genannten Aggregate sind dementsprechend zumindest im wesentlichen innerhalb der Abgasanlage der Brennkraftmaschine angeordnet. Hiermit können auch diese Elemente einfach erwärmt bzw. isoliert werden bzw. es ist einfach möglich, die Brennstoffzelle mit diesen Elementen zu verbinden, oder es kann deren Abwärme einfach und effizient für die Brennkraftmaschine bzw. deren Abgasreinigungsvorrichtung genutzt werden, jedenfalls dann, wenn die Brennstoffzelle oder die Brennstoffzelle und ein Reformer stromauf einer Abgasreinigungsvorrichtung für die Brennkraftmaschinen-Abgase zumindest im wesentlichen innerhalb eines diese führenden Rohres oder dgl. angeordnet ist/sind. Vorteilhafterweise können hiermit die Abgase der Brennstoffzelle in der Abgasreinigungsvorrichtung nachbehandelt werden, so dass hierfür kein eigenständiger Nachbrenner (mehr) erforderlich ist. Alternativ können die Brennstoffzelle oder die Brennstoffzelle und/oder ein Nachbrenner und/oder ein Reformer (zur Kraftstoffaufbereitung) stromab einer Abgasreinigungsvorrichtung für die Brennkraftmaschinen-Abgase zumindest im wesentlichen innerhalb eines diese führenden Rohres angeordnet sein.

Vorteilhafterweise ergibt sich mit dem grundlegenden Vorschlag der vorliegenden Erfindung, nämlich ein die Brennstoffzelle und eine weitere der genannten Komponenten enthaltendes Gehäuse zumindest im wesentlichen vom Abgas der Brennkraftmaschine zu umströmen, ein verringerter Isolationsbedarf an der Brennstoffzelle bzw. an deren Peripherie (Gehäuse, Versorgungsleitungen etc.) und der genannten Komponente, da einerseits der Wärmeverlust der Brennstoffzelle etc. aufgrund der geringen Temperaturdifferenz zwischen der Brennstoffzelle und dem diese umgebenden Abgasstrom reduziert ist, und andererseits eine den Abgasstrom der Brennkraftmaschine führende Abgasanlage bei (bevorzugtem) Einsatz in einem Kraftfahrzeug zu diesem hin üblicherweise bereits ausreichend isoliert ist. Somit sind vorteilhafterweise praktisch keine weiteren lsolationsmaßnahmen zum Schutz des Fahrzeugs oder dessen Komponenten im Hinblick auf die Temperaturen des Brennstoffzellen-Systems erforderlich sind.

Zur Umsetzung des Vorschlages, eine Brennstoffzelle zumindest im wesentlichen vom Abgasstrom einer Brennkraftmaschine umströmen zu lassen, ist die Brennstoffzelle bzw. das Gehäuse mit der weiteren genannten Komponente zumindest im wesentlichen in die die Abgase der Brennkraftmaschine führende Abgasanlage integriert, d.h. bspw. innerhalb eines entsprechend gestalteten, und einen dementsprechend vergrößerten Querschnitt aufweisenden Rohres oder in einem Wandabschnitt eines als abgasführendes Rohr fungierenden Hohlkörpers angeordnet. Zumindest für diejenigen erfindungsgemäßen Ausgestaltungen, bei denen die Brennstoffzelle bzw. deren Gehäuse stromauf einer AbgasNachbehandlungsvorrichtung oder Abgas-Reinigungsvorrichtung in der Abgasanlage der Brennkraftmaschine angeordnet ist, kann weiterhin die Brennstoffzelle bzw. deren Abwärme dazu genutzt werden, um diese Abgasnachbehandlungsvorrichtung, bei der es sich bspw. um einen 3-Wege-Katalysator oder ein Partikelfilter oder einen DeNOx-Katalysator handeln kann, schneller auf ihre Betriebstemperatur zu bringen oder um diese Abgasnachbehandlungsvorrichtung (insbesondere in Form eines Partikelfilter oder eines DeNOx-Katalysators) frei zu brennen, insbesondere dann, wenn das Abgas der Brennstoffzelle zuvor in einem sog. Nachbrenner nachverbrannt bzw. weiter erhitzt wurde. (Letzteres ist dem Fachmann grundsätzlich bekannt). Ein entsprechendes System ist somit dadurch gekennzeichnet, dass das Abgas der Brennstoffzelle vorzugsweise nach Weiterbehandlung in einem Nachbrenner einer vorrangig der Brennkraftmaschine zugeordneten Abgasreinigungsvorrichtung zu den Regenerierung gezielt zugeführt wird bzw. zuführbar ist.

Im Sinne einer vorteilhaften Weiterbildung kann zumindest ein Teil des Abgasstromes der Brennstoffzelle der Brennkraftmaschine zur Verbrennung zuführbar sein bzw. allgemein einer Abgas-Rückführeinrichtung der Brennkraftmaschine zugeführt werden. Auf diese Weise kann unverbrannter Rest-Kraftstoff, der im Brennstoffzel-len-Abgas enthalten sein könnte, sinnvoll genutzt werden, nämlich in der Brennkraftmaschine unter Abgabe von mechanischer Energie verbrannt werden, wobei gleichzeitig die Abgasemissionen der Brennkraftmaschine verringert werden; ferner kann das Temperaturniveau einer bzw. der Abgas-Rückführeinrichtung hierdurch in einem gewünschten Bereich gehalten werden. Es kann jedoch auch dem bzw. einem Reformer zur Aufbereitung von Kraftstoff für die Brennstoffzelle zumindest ein Teil des Abgases der Brennkraftmaschine direkt zugeführt werden, wobei Bestandteile dieses Abgases im Reformer genutzt werden können.

Im übrigen kann die Wärmeenergie des Abgases der Brennstoffzelle und/oder der Brennkraftmaschine nicht nur - wie weiter oben ausgeführt - in einem Wärmetauscher zur Erwärmung des der Brennstoffzelle zugeführten Frischluftstromes verwendet werden, sondern - ebenfalls in einem geeigneten Wärmetauscher - auch zur Vorwärmung von Kraftstoff verwendet werden, insbesondere für den Fall, dass für die Brennkraftmaschine vorgesehener Kraftstoff einem Reformer zur Aufbereitung von Kraftstoff für die Brennstoffzelle zugeführt wird, wobei dieser Kraftstoff stromauf des Reformers in einem Wärmetauscher vorverdampft wird.

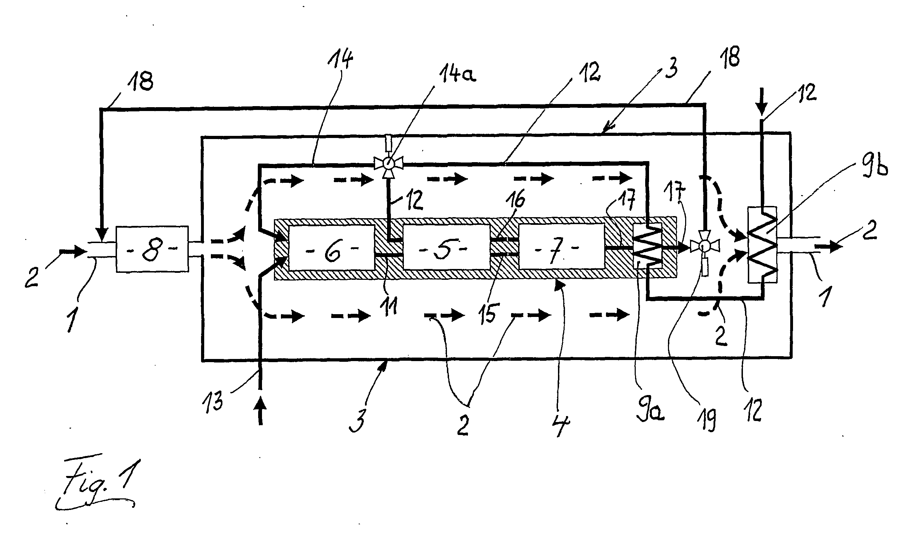

Die drei beigefügten Prinzipskizzen (Fig.1, Fig.2, Fig.3) zeigen erfindungsgemäße Systeme aus einer Brennstoffzelle und einer Brennkraftmaschine, wobei die erstgenannte stets vom Abgas der Brennkraftmaschine umströmt wird und insbesondere unterschiedliche Verläufe von "aneinander gekoppelten" Fluidströmen dargestellt sind. In sämtlichen Figuren sind dabei gleiche Elemente mit den gleichen Bezugsziffern gekennzeichnet.

So ist mit der Bezugsziffer 1 ein Abschnitt einer Abgasanlage einer nicht gezeigten Brennkraftmaschine (insbesondere als Antriebsaggregat eines Kraftfahrzeugs fungierend), gekennzeichnet, durch die in den Figuren von links nach rechts der durch Pfeile 2 dargestellte Abgasstrom der Brennkraftmaschine geführt wird. Diese Abgasanlage 1 weist einen erweiterten Abschnitt in Form eines Rohres 3 oder dgl. auf, innerhalb dessen nicht nur die Brennkraftmaschinen-Abgase geführt werden, sondern innerhalb dessen auch ein Gehäuse 4 angeordnet ist, das seinerseits zumindest eine Brennstoffzelle 5 enthält. Dieses Gehäuse 4 wird dabei direkt vom Abgasstrom 2 umströmt bzw. von diesem außenseitig beaufschlagt, so dass ein Teil der im Abgasstrom 2 enthaltenen Wärmemenge an das Gehäuse 4 bzw. an dessen Wand abgegeben wird.

Innerhalb des Gehäuses 4 ist zumindest eine Brennstoffzelle 5 angeordnet, der von außen, d.h. von außerhalb der Abgasanlage 1 und durch die Wand des Gehäuses 4 hindurch über eine Leitung 11 ein geeigneter Kraftstoff und über eine Leitung 12 Luft (bzw. Luftsauerstoff) zugeführt wird, so dass in der Brennstoffzelle in bekannter Weise elektrischer Strom erzeugt wird, der über eine nicht dargestellte elektrische Leitung zur Nutzung nach außen abgeführt wird. Die Brennstoffzelle 5, deren konkrete Bauart für das Wesen der vorliegenden Erfindung unerheblich ist - jedoch handelt es sich insbesondere um eine Festoxid-Brennstoffzelle - steht mit dem Gehäuse 4 solchermaßen in wärmeübertragender Verbindung, dass diese Brennstoffzelle 5 durch das vom Abgasstrom 2 erwärmte Gehäuse 4 ihrerseits erwärmt wird.

Bei allen dargestellten Ausführungsbeispielen ist neben der Brennstoffzelle 5 bzw. dieser vorgeschaltet im Gehäuse 4 noch ein Reformer 6 zur Aufbereitung von Kraftstoff für die Brennstoffzelle 5, und zwar aus dem für die nicht dargestellte Brennkraftmaschine vorgesehenem Kraftstoff, vorgesehen. Letzterer wird daher dem Reformer 6 über eine Leitung 13 von außen zugeführt, nährend der im Reformer 6 für die Brennstoffzelle 5 erzeugte Kraftstoff dieser aus dem Reformer 6 über die bereits erwähnte Leitung 11 zugeführt wird. Für die besagte Kraftstoffaufbereitung muss dem Reformer 6 ebenfalls Luft bzw. Luftsauerstoff zugeführt werden, was über eine Leitung 14 erfolgt.

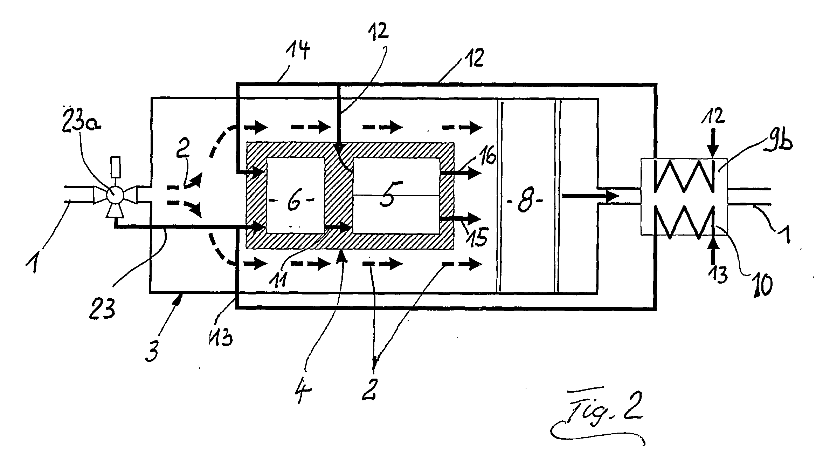

Bei den Ausführungsbeispielen nach den Figuren 1, 2 ist innerhalb des Gehäuses 4 weiterhin ein sog. Nachbrenner 7 vorgesehen, in dem Abgas der Brennstoffzelle 5, das noch unverbrannte Kraftstoffbestandteile enthalten kann, nachverbrannt wird bzw. werden kann. Der entsprechende Abgasstrom der Brennstoffzelle 5 wird aus dieser über eine Leitung 15 abgeführt, ferner wird der Abluftstrom der Brennstoffzelle 5, der üblicherweise noch unverbrauchten Luftsauerstoff enthält, über eine Leitung 16 abgeführt. Die Leitungen 15 und 16 münden im Nachbrenner 7, so dass in diesem eine erfolgreiche Nachverbrennung bzw. Verbrennung des Rest-Kraftstoffs der Brennstoffzelle 5 erfolgen kann. Die Abgase dieses Nachbrenners 7 werden dann über eine Leitung 17 aus diesem sowie aus dem Gehäuse 4 abgeführt.

Weiterer Bestandteil der Abgasanlage 1 ist ein Abgas-Katalysator 8 zur Reinigung des Abgases 2 der Brennkraftmaschine, wobei anstelle dieses Abgas-Katalysators 8 auch eine andere Abgasreinigungsvorrichtung (hierfür wird ebenfalls die Bezugsziffer 8 verwendet) vorgesehen sein kann. Beim Ausführungsbeispiel nach Fig.2 ist diese Abgasreinigungsvorrichtung 8 innerhalb des Gehäuses 4 angeordnet, während sie bei den anderen beiden Ausführungsbeispielen stromauf desselben vorgesehen ist. Hierauf wird später noch näher eingegangen.

In einzelnen Leitungen bzw. Abschnitten derselben, die den soweit beschriebenen Elementen Luft oder Kraftstoff zuführen, sind weiterhin Wärmetauscher 9a, 9b (für Luft) bzw. 10 (für Kraftstoff) vorgesehen, die daneben von einem der vorliegenden Abgasströme dieses Systems durchströmt bzw. beaufschlagt werden, so dass ein Teil der im jeweiligen Abgasstrom enthaltenen Wärmeenergie an den u.a. der Brennstoffzelle 5 über die Leitung 12 zugeführten Frischluftstrom bzw. an den dem Reformer 6 über die Leitung 13 zugeführten Kraftstoffstrom abgegeben wird.

Nun auf das Ausführungsbeispiel nach Fig.1 Bezug nehmend ist hierbei der Abgas-Katalysator 8 stromauf des Gehäuses 4 angeordnet. Hier wird der Kraftstoff dem Reformer 6 über eine Leitung 13 ohne spezielle Vorwärmung zugeführt. Besonders intensiv erwärmt wird jedoch der Luftstrom, der über die Leitung 12 der Brennstoffzelle 5 sowie über eine über ein Ventil 14a hiervon abzweigende Leitung 14 dem Reformer 6 zugeführt wird. Hier ist nämlich ein eigenständiger Wärmetauscher 9a für diesen Luftstrom vorgesehen, der nur vom Abgas der Nachbrenners 7 beaufschlagt wird, und der hier noch innerhalb des Gehäuses 4 (stromab des Nachbrenners 7) angeordnet ist. Bezüglich des in der Leitung 12 geführten Luftstromes diesem Wärmetauscher 9a vorgelagert ist ein Wärmetauscher 9b, durch den weiterhin der Abgasstrom 2 der Brennkraftmaschine nach Passieren des Gehäuses 4 hindurchgeleitet wird, wobei hier dieser Wärmetauscher 9b innerhalb des Rohres 3 angeordnet ist und auch die den Frisch-Luftstrom vom Wärmetauscher 9b durch den Wärmetauscher 9a hindurch zur Brennstoffzelle 5 bzw. zum Reformer 6 führende Leitung 12 (bzw. 14) innerhalb dieses Rohres 3 verläuft. Bei diesem Ausführungsbeispiel kann der Abgasstrom des Nachbrenners 7 über eine Leitung 18, die sich an ein Umschaltventil 19, das als Eingang die Leitung 17 besitzt, in die Abgasanlage 1 stromauf des Abgaskatalysators 8 eingeleitet werden, so dass in diesem nochmals eine Abgasreinigung durchgeführt bzw. dieser Abgaskatalysator 8 erwärmt werden kann. Alternativ kann die Leitung 17 über das Umschaltventil 19 innerhalb des Rohres 3 münden, so dass der Abgasstrom des Nachbrenners 7 zusammen mit dem Abgasstrom 2 der Brennkraftmaschine durch den Wärmetauscher 9b hindurch über den sich an das Rohr 3 anschließenden Abschnitt der Abgasanlage 1 abgeführt wird.

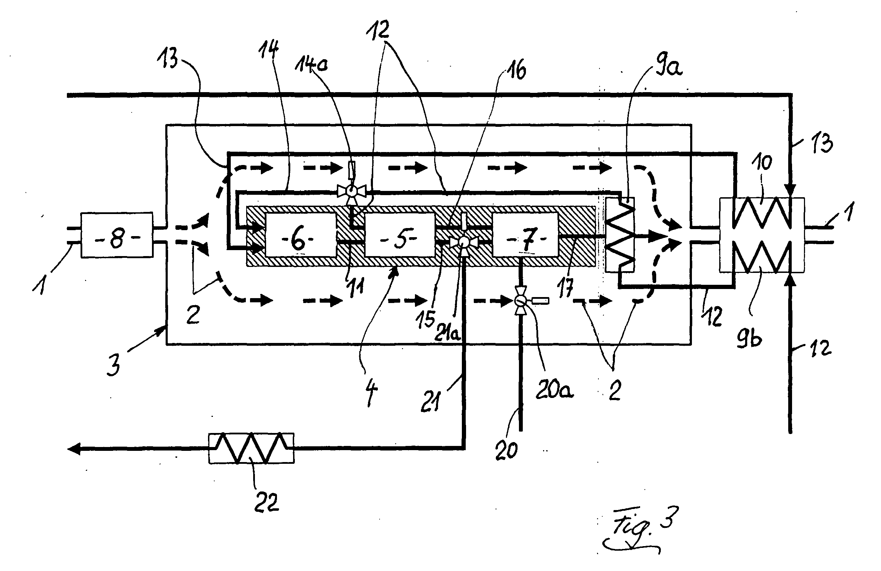

Ähnlich dem Ausführungsbeispiel nach Fig.1 ist das im weiteren erläuterte Ausführungsbeispiel nach Fig.3 aufgebaut, jedoch kann hierbei der Abgasstrom des Nachbrenners 7 nicht in den Abgaskatalysator 8 rückgeführt, sondern nur durch den Wärmetauscher 9a hindurch, der hier übrigens außerhalb des Gehäuses 4 jedoch innerhalb des Rohres 3 angeordnet ist, den Abgasen 2 der Brennkraftmaschine beigemengt und zusammen mit diesen durch die Wärmetauscher 9b, 10 hindurch, die hier außerhalb des Rohres 3 in die Abgasanlage 1 eingebunden sind, abgeführt werden. Während der Wärmetauscher 9b (abermals) der Vorwärmung von in der Leitung 12 weitergeführten Luft dient, wird im Wärmetauscher 10 der über die Leitung 13 dem Reformer 6 zugeführte Kraftstoff erwärmt. Diese Ausführungsvariante enthält weiterhin eine Leitung 20, über die - über ein Schaltventil 20a gesteuert - dem Nachbrenner 7 zusätzliche Frischluft (bzw. Luftsauerstoff als Oxidationsmittel) zuführbar ist. Ferner ist über eine Leitung 21, die sich an ein in der Leitung 15 vorgesehenes Umschaltventil 21 a anschließt, eine Teil-Menge zwischen 0% und 100% des Brennstoffzellen-Abgasstromes abführbar, und zwar über einen Kühler 22 zur (nicht dargestellten) Brennkraftmaschine, in der dieses Brennstoffzellen-Abgas dann nachverbrannt werden kann; vorteilhafterweise unter Nutzung des darin noch enthaltenen unverbrannten Rest-Kraftstoffs.

Beim Ausführungsbeispiel nach Fig.2 ist der Abgas-Katalysator 8 bzw. die Abgasreinigungsvorrichtung 8 in Strömungsrichtung des Brennkraftmaschinen-Abgases 2 betrachtet stromab der Brennstoffzelle 5 bzw. stromab des Gehäuses 4 hier noch innerhalb des Rohres 3 derart angeordnet, dass auch das über die Leitung 15 abgeführte Abgas der Brennstoffzelle 5 sowie deren über die Leitung 16 abgeführte Abluft durch die Abgasreinigungsvorrichtung 8 hindurchgeführt wird, so dass diese gleichzeitig quasi als Nachbrenner für das Brennstoffzellen-Abgas fungiert. Nach Durchströmen der Abgasreinigungsvorrichtung 8 wird der gesamte Abgasstrom analog dem Ausführungsbeispiel nach Fig.3 durch einen Wärmetauscher 9b für in der Leitung 12 geführte Luft sowie durch einen Wärmetauscher 10 für durch die Leitung 13 geführten Kraftstoff hindurch und anschließend in der Abgasanlage 1 weiter abgeführt. Bei diesem Ausführungsbeispiel kann dem Reformer 6 neben dem für die Brennkraftmaschine vorgesehenen Kraftstoff - dieser wird über die Leitung 13 herangeführt - auch noch Abgas der Brennkraftmaschine, welches unter anderem unverbrannte Kraftstoffbestandteile und weitere möglicherweise nützliche Bestandteile enthalten könnte, zugeführt werden, und zwar über eine Leitung 23, die über ein Ventil 23a von der Abgasanlage 1 stromauf des Rohres 3 abzweigt.

Sämtlichen Ausführungsbeispielen ist gemein, dass insbesondere die Brennstoffzelle 5, jedoch auch weitere zugehörige Elemente, nämlich zumindest ein Reformer 6, ggf. auch ein Nachbrenner 7, in die Abgasanlage 1 einer Brennkraftmaschine körperlich thermisch integriert ist bzw. sind. Die Brennstoffzelle 5 kann mit Inbetriebnahme der Brennkraftmaschine somit bestmöglich bzw. schnellstmöglich auf ihre Betriebstemperatur gebracht werden und aufwändige Isoliermaßnahmen können entfallen. Mittels vorzugsweise (außer bei Fig.2) zweistufiger Luftvorheizung kann die Abwärme der Abgase sowohl der Brennstoffzelle 5 (ggf. des Nachbrenners 7) als auch der Brennkraftmaschine weiter genutzt werden. Bei den Ausführungsbeispielen nach den Figuren 1, 2 kann aber mit Inbetriebnahme der Brennstoffzelle 5 auch der Abgaskatalysator 8 bei nicht betriebener Brennkraftmaschine vorgewärmt werden, wobei durchaus eine Vielzahl von Details abweichend von obigen Erläuterungen gestaltet sein kann, ohne den Inhalt der Patentansprüche zu verlassen.

## Patentansprüche

1. System bestehend aus einer Brennstoffzelle (5) und einer Brennkraftmaschine mit einer Abgasanlage (1), insbesondere für ein Kraftfahrzeug, wobei zur Erzeugung einer thermischen Kopplung das Gehäuse der Brennstoffzelle (5) vom Abgasstrom (2) der Brennkraftmaschine umströmt wird,
**dadurch gekennzeichnet, dass** die Brennstoffzelle (5) und zusätzlich ein Nachbrenner (7) für deren Abgas und/oder ein Reformer (6) zur Aufbereitung von deren Kraftstoff in einem direkt vom Abgasstrom (2) umströmten oder von diesem außenseitig beaufschlagten Gehäuse (4) vorgesehen sind, das innerhalb eines den Abgasstrom (2) der Brennkraftmaschine führenden und einen entsprechend vergrößerten Querschnitt aufweisenden Rohres (3) oder Hohlkörpers angeordnet ist.

2. System nach Anspruch 1,
**dadurch gekennzeichnet, dass** das Gehäuse (4) stromab einer Abgasreinigungsvorrichtung (8) für die Brennkraftmaschinen-Abgase (2) zumindest im wesentlichen innerhalb eines diese führenden Rohres (3) oder dgl. angeordnet ist.

3. System nach Anspruch 1,
**dadurch gekennzeichnet, dass** das Gehäuse (4) stromauf einer Abgasreinigungsvorrichtung (8) für die Brennkraftmaschinen-Abgase (2) zumindest im wesentlichen innerhalb eines diese führenden Rohres (3) oder dgl. angeordnet ist.

4. System nach einem der vorangegangenen Ansprüche,
**dadurch gekennzeichnet, dass** Abgase der Brennstoffzelle und/oder der Brennkraftmaschine mit dem der Brennstoffzelle zugeführten Luftstrom in wärmeübertragender Verbindung stehen.

5. System nach einem der vorangegangenen Ansprüche,
**dadurch gekennzeichnet, dass** zumindest ein Teil des Abgasstromes der Brennstoffzelle der Brennkraftmaschine zur Verbrennung zuführbar ist.

6. System nach einem der vorangegangenen Ansprüche,
**dadurch gekennzeichnet, dass** einem Reformer (6) zur Aufbereitung von Kraftstoff für die Brennstoffzelle (5) aus dem für die Versorgung der Brennkraftmaschine vorgesehenem Kraftstoff letztgenannter über einen Wärmetauscher (10) zugeführt wird, der vom Abgas der Brennstoffzelle und/oder der Brennkraftmaschine durchströmt wird.

7. System nach einem der vorangegangenen Ansprüche,
**dadurch gekennzeichnet, dass** einem Reformer (6) zur Aufbereitung von Kraftstoff für die Brennstoffzelle (5) Abgas der Brennkraftmaschine zuführbar ist.

8. System nach einem der vorangegangenen Ansprüche,
**dadurch gekennzeichnet, dass** das Abgas der Brennstoffzelle vorzugsweise nach Weiterbehandlung in einem Nachbrenner einer vorrangig der Brennkraftmaschine zugeordneten Abgasreinigungsvorrichtung zu deren Regenerierung gezielt zuführbar ist.

## Claims

1. A system consisting of a fuel cell (5) and an internal combustion engine with an exhaust gas system (1), in particular for a motor vehicle, wherein the exhaust gas flow (2) from the internal combustion engine flows around the housing of the fuel cell (5) to produce a thermal coupling, **characterised in that** the fuel cell (5) and additionally an after-burner (7) for its exhaust gas and/or a reformer (6) for processing fuel thereof are provided in a housing (4), which has the exhaust gas flow (2) flowing directly around it or is acted upon on the outside thereby, said housing being arranged inside a tube (3) or hollow body carrying the exhaust gas flow (2) from the internal combustion engine and having a correspondingly enlarged cross section.

2. A system according to claim 1, **characterised in that** the housing (4) is arranged downstream of an exhaust gas purification device (8) for the internal combustion engine exhaust gases (2) at least substantially inside a tube (3) or the like carrying said exhaust gases.

3. A system according to claim 1, **characterised in that** the housing (4) is arranged upstream of an exhaust gas purification device (8) for the internal combustion engine exhaust gases (2) at least substantially inside a tube (3) or the like carrying said exhaust gases.

4. A system according to any one of the preceding claims, **characterised in that** the exhaust gases from the fuel cell and/or the internal combustion engine have a heat-transferring connection to the air flow supplied to the fuel cell.

5. A system according to any one of the preceding claims, **characterised in that** at least a part of the exhaust gas flow from the fuel cell can be supplied to the internal combustion engine for combustion.

6. A system according to any one of the preceding claims, **characterised in that** a reformer (6) for processing fuel for the fuel cell (5) is supplied with fuel provided to supply the internal combustion engine via a heat exchanger (10), the exhaust gas from the fuel cell and/or the internal combustion engine flowing through said heat exchanger.

7. A system according to any one of the preceding claims, **characterised in that** exhaust gas from the internal combustion engine can be supplied to a reformer (6) to process fuel for the fuel cell (5).

8. A system according to any one of the preceding claims, **characterised in that** the exhaust gas from the fuel cell can be supplied in a targeted manner, preferably after further treatment in an after-burner, to an exhaust gas purification device associated primarily with the internal combustion engine in order to regenerate it.

## Revendications

1. Système formé d'une pile à combustible (5) et d'un moteur à combustion équipé d'une installation de gaz d'échappement (1), notamment d'un véhicule automobile et le boîtier de la pile à combustible (5) est entouré par la veine des gaz d'échappement (2) du moteur à combustion, pour réaliser le couplage thermique,
**caractérisé en ce que** la pile à combustible (5) et en plus un brûleur de post-combustion (7) des gaz d'échappement du moteur et/ou un reformeur (6) pour préparer son carburant, sont prévus dans un boîtier (4) directement balayé sur le côté extérieur par la veine des gaz d'échappement (2) ou sollicité par la veine des gaz d'échappement sur le côté extérieur, et le boîtier loge un tube (3) ou corps creux de section allant en augmentant, conduisant la veine des gaz d'échappement (2) du moteur à combustion, et ayant une section croissante.

2. Système selon la revendication 1,
**caractérisé en ce que** le boîtier (4) est installé en aval d'un dispositif de nettoyage (8) des gaz d'échappement (2) d'un moteur à combustion, en étant situé au moins pratiquement à l'intérieur d'un tube (3) conduisant les gaz ou d'un moyen analogue.

3. Système selon la revendication 1,
**caractérisé en ce que** le boîtier (4) est installé en amont d'un dispositif de nettoyage des gaz d'échappement (8) pour traiter les gaz d'échappement (2) du moteur à combustion, en étant situé au moins pour l'essentiel au-dessus du boitier et à l'intérieur d'un tube (3) conduisant les gaz d'échappement.

4. Système selon les revendications précédentes,
**caractérisé en ce que** les gaz d'échappement de la pile à combustible et/ou du moteur à combustion, coopèrent dans le sens de l'échange de chaleur avec la veine d'air fournie à la pile à combustible.

5. Système selon les revendications précédentes,
**caractérisé en ce qu'** au moins une partie de la veine des gaz d'échappement de la pile à combustible est fournie au moteur à combustion pour être brûlée.

6. Système selon les revendications précédentes,
**caractérisé par** un réformeur (6) pour préparer le combustible de la pile à combustible (5) à partir du carburant d'alimentation du moteur à combustion et passant par un échangeur de chaleur (10) traversé par les gaz d'échappement de la pile à combustible et/ou du moteur à combustion.

7. Système selon les revendications précédentes,
**caractérisé par** un réformeur (6) pour préparer le carburant de la pile à combustible (5), reçoit des gaz d'échappement du moteur à combustion.

8. Système selon les revendications précédentes,
**caractérisé en ce que** les gaz d'échappement de la pile à combustible, reçoivent de préférence un traitement ultérieur dans un brûleur en aval d'un dispositif de nettoyage des gaz d'échappement associé à titre principal au moteur à combustion pour effectuer une régénération ciblée.
